# EUROPÄISCHE PATENTSCHRIFT

(11) **EP 0 686 255 B1**
(45) Veröffentlichungstag und Bekanntmachung des Hinweises auf die Patenterteilung: **15.03.2000**
(21) Anmeldenummer: 95903802.7
(22) Anmeldetag: 15.12.1994
(51) Int. Cl.: G01F 1/66, G01F 1/712

(54) **CLAMP-ON-ULTRASCHALL-VOLUMENDURCHFLUSS-MESSGERÄT**
CLAMP-ON ULTRASONIC VOLUME FLOW RATE MEASURING DEVICE
APPAREIL VERROUILLABLE DE MESURE PAR ULTRASONS DU DEBIT VOLUMIQUE

(30) Priorität: 23.12.1993 EP 93810901
(43) Veröffentlichungstag der Anmeldung: 13.12.1995
(73) Patentinhaber: Endress + Hauser Flowtec AG, CH-4153 Reinach BL 1 (CH)
(72) Erfinder: OLDENZIEL, Daniel, CH-2300 La Chaux-de-Fonds (CH); GRIESSMANN, Marcel, F-68200 Mulhouse (FR)
(74) Vertreter: Morstadt, Volker, Dipl.-Ing.
(86) Internationale Anmeldenummer: EP9404160
(87) Internationale Veröffentlichungsnummer: WO9517650

(56) Entgegenhaltungen:
- EP-A- 0 446 023
- WO-A-88/08516
- US-A- 4 598 593

## Beschreibung

Die Erfindung betrifft Clamp-on-Ultraschall-Volumendurchfluß-Meßgeräte mit mindestens einem Paar Ultraschallwandlern, von denen einer als Sender oder als Empfänger betriebenen ist und die längs einer von dem zu messenden Fluid durchströmten Rohrleitung achsparallel versetzt auf deren Außenwand angeordnet sind.

In der eigenen US-A 50 52 230 ist ein Ultraschall-Volumendurchfluß-Meßgerät beschrieben
- mit zwei als Sender oder Empfänger betriebenen Ultraschallwandlern, die längs einer von dem zu messenden Fluid durchströmten Rohrleitung gegenüberliegend und in Richtung von deren Achse gegeneinander versetzt angeordnet sind,
- und mit einer Treiber/Auswerte-Elektronik, die
   -- nacheinander immer nur einen der Ultraschallwandler mit einem Sinussignal-Burst speist und die Laufzeit von zwischen den Ultraschallwandlern in Vorwärts- und Rückwärtsrichtung durch das Fluid hindurch sich vom einem zum anderen Ultraschallwandler ausbreitenden Ultraschallsignalen mißt und daraus den Volumendurchfluß bestimmt.

In der WO-A 88/08516 ist ferner ein Clamp-on-Ultraschall-Volumendurchfluß-Meßgerät beschrieben
- mit zwei als Sender oder Empfänger betriebenen Ultraschallwandlern, die längs einer von dem zu messenden Fluid durchströmten Rohrleitung gegenüberliegend und in Richtung von deren Achse gegeneinander versetzt angeordnet sind,
- mit einem ersten Zusatzwandler,
- mit einem zweiten Zusatzwandler,
- mit einer Treiber/Auswerte-Elektronik, die
   -- nacheinander immer nur einen der Ultraschallwandler mit einem Sinussignal-Burst speist und die Laufzeit von zwischen den Ultraschallwandlern in Vorwärts- und Rückwärtsrichtung durch das Fluid hindurch sich vom einem zum anderen Ultraschallwandler ausbreitenden Ultraschallsignalen mißt und daraus den Volumendurchfluß bestimmt, und
- mit einer Zusatz-Elektronik,
   -- die senkrecht zur Achse der Rohrleitung mittels des ersten Zusatzwandlers die Orthogonal-Laufzeit des Ultraschallsignals in der Wand der Rohrleitung und die mittels des zweiten Zusatzwandlers die Orthogonal-Laufzeit der durch das Fluid sich ausbreitenden und an der diesem Zusatz-Ultraschallwandler gegenüberliegenden Innenwand der Rohrleitung reflektierten Ultraschallsignals mißt.

In der US-A 44 84 478, in der US-A 45 98 593 und in der EP-A 446 023 ist ferner jeweils ein Clamp-on-Ultraschall-Volumendurchfluß-Meßgerät beschrieben
- mit mindestens zwei als Sender oder Empfänger betriebenen Ultraschallwandlern, die längs einer von dem zu messenden Fluid durchströmten Rohrleitung auf deren Außenwand achsparallel versetzt auf deren Außenwand angeordnet sind, und
- mit einer Treiber/Auswerte-Elektronik,
   -- die die mindestens zwei Ultraschallwandler gleichzeitig mit einem Impuls-Burst speist und die aus innerhalb des Fluids an darin vorhandenen Fremdkörpern reflektierten und von den mindestens zwei Ultraschallwandlern in den Pausen zwischen den Impuls-Bursts empfangenen Reflexionssignalen mittels Korrelation die Zeitdifferenz zwischen den Reflexionssignalen mißt und daraus den Volumendurchfluß bestimmt.

Das Ultraschall-Volumendurchfluß-Meßgeräte nach der genannten US-A 50 52 230 bzw. das Clamp-on-Ultraschall-Volumendurchfluß-Meßgerät nach der genannten WO-A 88/08516 sind einerseits an sich nur für Fluide gedacht, die keine Fremdkörper mit sich führen, und werden bei zunehmendem Fremdkörperanteil schließlich betriebsunfähig, da der Ultraschall im Fluid so stark gestreut und/oder absorbiert wird, daß er nicht mehr in ausreichender Stärke zum Empfänger gelangt.

Die Clamp-on-Ultraschall-Volumendurchfluß-Meßgeräte nach der genannten US-A 44 84 478 bzw. der genannten US-A 45 98 593 bzw. der genannten EP-A 446 023 sind andererseits an sich nur für Fluide mit eingelagerten Fremdkörpern gedacht, versagen jedoch, wenn fremdkörperlose Fluide gemessen werden sollen.

In praxi kann aber einerseits bei an sich fremdkörperfreien Fluiden nicht mit Sicherheit ausgeschlossen werden, daß nicht doch einmal Fremdkörper im Fluid auftreten, die die Messung stören oder sogar unterbinden, und andererseits kann bei an sich fremdkörper-haltigen Fluiden nicht sicher ausgeschlossen werden, daß das Fluid nicht doch einmal fremdkörperfrei strömt, dessen Messung dann ebenfalls gestört oder sogar unterbunden wird.

Ein Ziel der Erfindung ist es daher, die beiden erwähnten, je für sich beschriebenen Meßprinzipien in einem Clamp-on-Ultraschall-Volumendurchfluß-Meßgerät so miteinander zu vereinigen, daß das Meßgerät automatisch in Abhängigkeit von einem vom Benutzer einstellbaren Fremdkörperanteil des Fluids entweder nach den einen oder nach dem anderen Meßprinzip arbeitet.

Die Erfindung besteht daher in einem Clamp-on-Ultraschall-Volumendurchfluß-Meßgerät
- mit einem ersten Paar Ultraschallwandler,
   -- von denen entweder jeweils der eine als Sendewandler und der andere als Empfangswandler bzw. umgekehrt betrieben ist
   -- oder die beide kurzzeitig als Sendewandler und anschließend als Empfangswandler betrieben sind und
   -- die längs einer von dem zu messenden Fluid durchströmten Rohrleitung auf deren Außenwand achsparallel versetzt und mit einem von 90° abweichenden Winkel zwischen der Richtung des von ihnen erzeugten Ultraschalls und der Achse der Rohrleitung angeordnet sind,
- mit einem zweiten Paar Ultraschallwandler, von denen jeder gleichzeitig als Sendewandler oder als Empfangswandler betrieben ist und die längs der Rohrleitung auf deren Außenwand achsparallel versetzt und mit einem Winkel von kleiner/gleich 90° zwischen der Richtung des von ihnen erzeugten Ultraschalls und der Achse der Rohrleitung angeordnet sind,
- und mit einer Treiber/Auswerte-Elektronik, die so eingerichtet ist, daß sie
   -- entweder einen bzw. die Ultraschallwandler des ersten Paars mit einem Impuls-Burst speist und die Laufzeit von zwischen diesen Ultraschallwandlern in Vorwärts- und Rückwärts-Flußrichtung durch das Fluid hindurch sich ausbreitenden und an der diesen Ultraschallwandlern gegenüberliegenden Innenwand der Rohrleitung reflektierten Ultraschallsignalen mißt und daraus den Volumendurchfluß bestimmt (= Laufzeit-Elektronik)
   -- oder die Ultraschallwandler des zweiten Paars gleichzeitig mit dem Impuls-Burst speist und aus innerhalb des Fluids an darin vorhandenen Fremdkörpern reflektierten und von diesen Ultraschallwandlern in den Pausen zwischen den Impuls-Bursts empfangenen Reflexionssignalen durch Korrelations deren Zeitdifferenz mißt sowie daraus den Volumendurchfluß bestimmt (= Korrelations-Elektronik) und
   -- die eine Umschalt-Elektronik mit einem Schwellwertschalter enthält,
      --- die so eingerichtet ist, daß sie in Abhängigkeit vom Ausgangssignal des Schwellwertschalters die Laufzeit-Elektronik oder die Korrelations- Elektronik einschaltet und
      --- welchem Schwellwertschalter ein einstellbares Schwellwert-Signal und ein Effektivwert-Signal zugeführt sind, das aus einem in Empfangsbetrieb von einem der Ultraschallwandler des ersten Paars abgegebenen Signal nach dessen Integration gebildet ist.

Nach einer Weiterbildung der Erfindung sind je ein Ultraschallwandler des ersten Paars und des zweiten Paars zu einem Paar von Verbund-Ultraschallwandlern vereinigt.

Nach einer anderen Weiterbildung der Erfindung sind ein Clamp-on-Zusatz-Ultraschallwandler und eine Zusatz-Elektronik vorgesehen,
- die so eingerichtet ist, daß sie jeweils senkrecht zur Achse der Rohrleitung die Orthogonal-Laufzeit des Ultraschallsignals in der Wand der Rohrleitung und die Orthogonal-Laufzeit der durch das Fluid sich ausbreitenden und an der dem Zusatz-Ultraschallwandler gegenüberliegenden Innenwand der Rohrleitung reflektierten Ultraschallsignals mißt,
   -- der ein dem Außenumfang der Rohrleitung proportionales Umfangssignal und ein der Schallgeschwindigkeit im Material der Rohrleitung proportionales Schallgeschwindigkeitssignal zugeführt sind und
- die außerdem so eingerichtet ist, daß sie aus den beiden Orthogonal-Laufzeiten, aus den Umfangssignal und dem Schallgeschwindigkeitssignal die Wandstärke der Rohrleitung und die Schallgeschwindigkeit im Fluid bestimmt.

In Ausgestaltung der Erfindung kann als Schwankungssignal das Ausgangssignal einer Effektivwert-Stufe oder das Ausgangssignal eines Gleichrichters oder das Ausgangssignal eines Spitze/Spitze-Detektors dienen.

Die Erfindung wird nun anhand der Zeichnung näher erläutert, in deren Figuren schematisch der mechanische Teil und Blockschaltbilder von Betriebsschaltungen des der Erfindung zugrunde liegenden Prinzips gezeigt und gleiche Teile mit denselben Bezugszeichen bezeichnet sind.
- Fig. 1: zeigt in schematisierter Schnittansicht den mechanischen Teil eines Clamp-on-Ultraschall-Volumendurchfluß-Meßgeräts,
- Fig. 2: zeigt in schematisierter Schnittansicht den mechanischen Teil einer Weiterbildung des Clamp-on-Ultraschall-Volumendurchfluß-Meßgeräts nach Fig. 1,
- Fig. 3: zeigt den mechanischen Teil der Anordnung nach Fig. 1 zusammen mit einem ausführlichen Blockschaltbild einer Betriebsschaltung des Clamp-on-Ultraschall-Volumendurchfluß-Meßgeräts der Erfindung, und
- Fig. 4: zeigt den mechanischen Teil der Anordnung nach Fig. 2 zusammen mit einem auf die wesentlichen Funktionsblöcke komprimierten Blockschaltbild einer Betriebsschaltung.

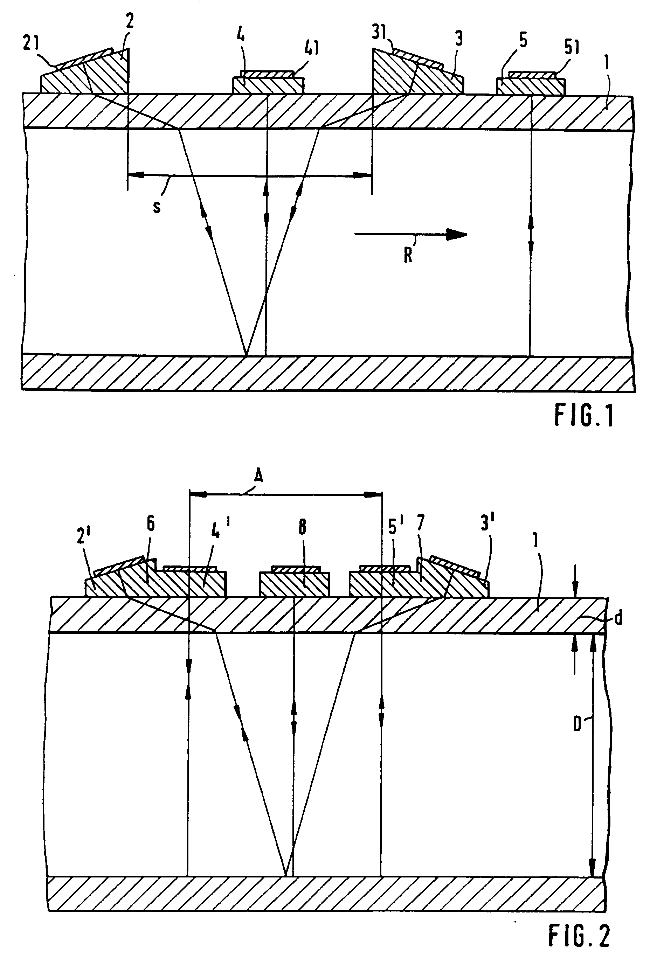

In der in Fig. 1 stark schematisiert gezeigten Schnittansicht des mechanischen Teils eines Clamp-on-Ultraschall-Volumendurchfluß-Meßgeräts ist längs einer von dem zu messenden Fluid in Richtung des Pfeiles R durchströmten Rohrleitung 1 auf deren Außenwand ein erstes Paar Ultraschallwandler 2, 3 achsparallel versetzt angeordnet.

Dieses Paar Ultraschallwandler kann auf zweierlei Weise betrieben werden. Zum einen kann abwechselnd der eine als Sendewandler bzw. der andere als Empfangswandler betrieben werden, so daß entweder der Ultraschallwandler 2 als Sende- und der Ultraschallwandler 3 als Empfangswandler oder der Ultraschallwandler 3 als Sende- und der Ultraschallwandler 2 als Empfangswandler wirken, wodurch aufeinanderfolgend entweder in Richtung der Strömung des Fluids oder in Gegenrichtung gemessen wird. Zum anderen können beide Ultraschallwandler 2, 3 kurzzeitig als Sendewandler und anschließend als Empfangswandler betrieben werden, wodurch gleichzeitig in Richtung der Strömung des Fluids und in Gegenrichtung gemessen wird.

Ferner ist ein zweites Paar Ultraschallwandler 4, 5 vorgesehen, von denen jeder gleichzeitig als Sendewandler oder als Empfangswandler betrieben ist und die längs der Rohrleitung ebenfalls auf deren Außenwand achsparallel versetzt, allerdings mit einem Winkel von 90° zwischen der Richtung des von ihnen erzeugten Ultraschalls und der Achse der Rohrleitung angeordnet sind.

Der erwähnte, von 90° abweichende Winkel der Ultraschallwandler 2, 3 des ersten Paars ergibt sich durch ihren keilförmigen Aufbau, wobei die Öffnungen der jeweiligen Keilwinkel einander zugewandt sind. Der keilförmige Aufbau wird dadurch erreicht, daß zwischen der Rohrleitung 1 und der Ultraschall-Entstehungsfläche 21 bzw. 31 ein Keil aus schalleitendem Material angebracht ist.

Obwohl der erwähnte Winkel von 90° der Ultraschallwandler 4, 5 des zweiten Paars die derzeit beste Ausführungsform darstellt, sind Anwendungsfälle nicht ausschließbar, in denen dieser Winkel kleiner als 90° gemacht werden sollte. Es ergibt sich dann für die Ultraschallwandler 4, 5 des zweiten Paars ein mit denen des ersten Paars vergleichbarer keilförmiger Aufbau.

Wie in Fig.1 anhand eines eingezeichneten Schallstrahls gezeigt ist, hat die Keilform der Ultraschallwandler 2, 3 zur Folge, daß der beispielsweise vom Ultraschallwandler 2 abgestrahlte Ultraschall unter einem von 90° abweichenden Winkel auf die den Ultraschallwandlern 2, 3 gegenüberliegende Innenwand der Rohrleitung 1 trifft und dort in Richtung auf den Ultraschallwandler 3 reflektiert wird. Der gegenseitige Abstand s der Ultraschallwandler 2, 3 ist so gewählt, daß der an der Innenwand der Rohrleitung 1 reflektierte Ultraschall möglichst vollständig zum Empfänger-Ultraschallwandler gelangt.

Der erwähnte Winkel von 90° ergibt sich bei den Ultraschallwandlern 4, 5 des zweiten Paars dadurch, daß sie mit ihrer Ultraschall-Entstehungsfläche 41, 51 ohne Zwischenlage eines Keils wiederum auf der Außenwand der Rohrleitung 1 angeordnet sind. Dadurch breitet sich der Ultraschall praktisch senkrecht und orthogonal zur Achsrichtung der Rohrleitung 1 durch das Fluid hindurch aus und wird an deren gegenüberliegenden Innenwand zum Sendewandler hin reflektiert.

Die Fig. 2 zeigt in der gleichen zeichnerischen Darstellungsweise wie Fig. 1 eine Weiterbildung der Anordnung von Fig. 1, und zwar sind je ein Ultraschallwandler des ersten Paars, nämlich die Ultraschallwandler 2, 4, und je ein Ultraschallwandler des zweiten Paars, nämlich die Ultraschallwandler 3, 5, zu einem Paar von Verbund-Ultraschallwandlern 6, 7 vereinigt. Dabei enthält der Verbund-Ultraschallwandler 6 bzw. 7 den keilförmigen Ultraschallwandler 2' bzw. 3' und den nichtkeilförmigen Ultraschallwandler 4' bzw. 5'.

Ferner zeigt die Fig. 2 einen nicht-keilförmigen Zusatz-Ultraschallwandler 8, der wie die übrigen Ultraschallwandler an der Außenwand der Rohrleitung 1 befestigt ist, dessen Ultraschall sich praktisch senkrecht zur Achsrichtung der Rohrleitung 1 durch das Fluid hindurch ausbreitet und an deren gegenüberliegender Innenwand zu ihm hin reflektiert wird.

In Fig. 2 sind ferner wichtige Abstände eingezeichnet, nämlich die Wandstärke d der Rohrleitung 1, deren Innendurchmesser D, der Abstand A der jeweiligen Mitte der Ultraschallwandler 4', 5', der auch den Abstand zwischen den Ultraschallwandler 2', 3' festlegt.

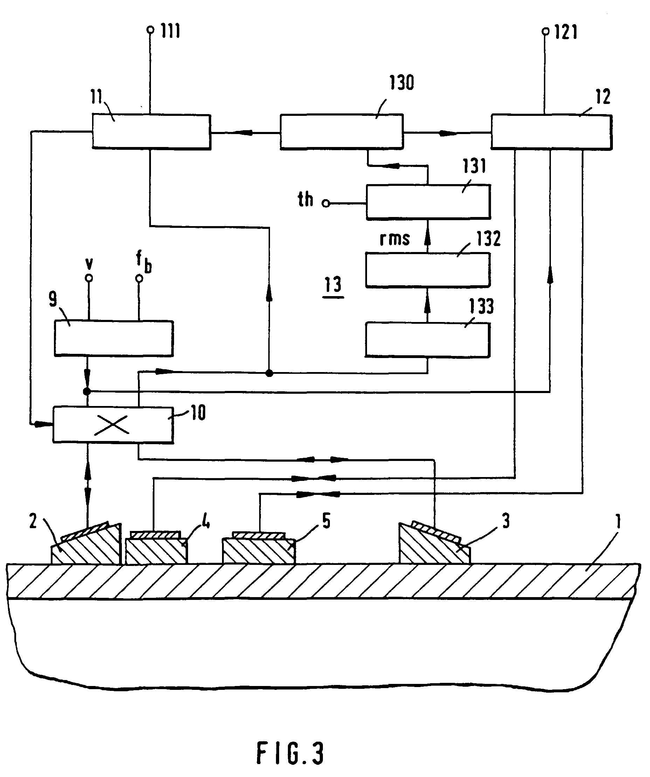

Die Fig. 3 zeigt den mechanischen Teil der Anordnung von Fig. 1 zusammen mit einem Blockschaltbild, in dem wesentliche Funktionsblöcke einer Treiber/Auswerte-Elektronik dargestellt sind. Ein Burst-Generator 9 erzeugt Impulsbursts, also innerhalb der Impulse einer virtuellen Rechteck-Hüllkurve mit vorgebbarem Puls-Pausen-Verhältnis v jeweils eine wählbare Anzahl n (n ≥ 1) von hochfrequenten Impulsen, die z.B. eine Frequenz f_{b} in der Größenordnung von 1 MHz haben können, während die Impulse der Rechteck-Hüllkurve z.B. eine Dauer von 10 µs haben können, also n=10 1-MHz-Impulse in jeden dieser Impulse passen. Die Einstellbarkeit des Burst-Generators 9 hinsichtlich seines Puls-Pausen-Verhältnisses v und der erwähnten Frequenz f_{b} ist durch entsprechend bezeichnete Eingänge am Burst-Generator 9 symbolisiert.

Das Ausgangssignal des Burst-Generators 9 ist einem Überkreuzschalter 10 zugeführt, der, wie in der eingangs genannten US-A 50 52 230 beschrieben ist, die Ultraschallwandler 2, 3 abwechselnd als Sende- bzw. Empfangswandler arbeiten läßt. Das Umschalten wird von einer Laufzeit-Elektronik 11 gesteuert, wie sie dieser US-A 50 52 230 ebenfalls zu entnehmen ist.

In dieser oben bereits erwähnten einen Betriebsart speist die Laufzeit-Elektronik 11 nacheinander immer nur einen Ultraschallwandler 2 bzw. 3 des ersten Paars mit einen Impuls-Burst und mißt die Laufzeit von zwischen den Ultraschallwandlern 2 und 3 in Vorwärts-Flußrichtung bzw. zwischen den Ultraschallwandlern 3 und 2 in Rückwärts-Flußrichtung des Fluids durch es hindurch sich ausbreitenden und an der den Ultraschallwandlern 2, 3 gegenüberliegenden Innenwand der Rohrleitung 1 reflektierten Ultraschallsignalen und bestimmt daraus den Volumendurchfluß.

In der oben erwähnten anderen Betriebsart speist die Laufzeit-Elektronik 11 beide Ultraschallwandler 2, 3 kurzzeitig mit dem Impuls-Burst, die somit gleichzeitig Sendewandler sind. Anschließend, wenn die Ultraschallwandler 2, 3 Empfangswandler sind, mißt die Laufzeit-Elektronik 11 die Laufzeit von zwischen den Ultraschallwandlern 2 und 3 in Vorwärts-Flußrichtung bzw. zwischen den Ultraschallwandlern 3 und 2 in Rückwärts-Flußrichtung des Fluids durch es hindurch sich ausbreitenden und an der den Ultraschallwandlern 2, 3 gegenüberliegenden Innenwand der Rohrleitung 1 reflektierten Ultraschallsignalen und bestimmt daraus den Volumendurchfluß.

Die Laufzeit-Elektronik 11 gibt somit in beiden Betriebsarten an ihrem Ausgang 111 ein den Volumen-Durchfluß repräsentierendes Signal ab, z.B. auf einem Display und/oder als geeignetes elektrisches Signal, wie z.B. ein dem jeweiligen Meßbereich zugeordnetes Stromsignal von 4 mA bis 20 mA.

Die Umschalt-Elektronik 13 von Fig. 3 enthält einen elektronischen Umschalter 130, dessen Steuereingang mit dem Ausgang eines Schwellwertschalters 131 verbunden ist. Diesem ist ein seine Schaltschwelle bestimmendes, vom Benutzer einstellbares Schwellwert-Signal th und ein Schwankungssignal-Signal rms zugeführt. Dieses Signal wird mittels einer Effektivwert-Stufe 132 aus einem in Empfangsbetrieb von einem der Ultraschallwandler 2, 3 des ersten Paars abgegebenen Signal nach dessen Integration gebildet. Hierzu dient ein Integrator 133, der z.B. eine Sample-and-Hold-Stufe sein kann, dessen Eingang mit einem der Ausgänge des Überkreuzschalters 10 verbunden ist.

Anstatt der Effektivwert-Stufe 132 kann auch ein Gleichrichter oder ein Spitze-Spitze-Detektor verwendet werden, deren jeweiliges Ausgangssignal dann das entsprechende Schwankungssignal ist.

Ein Eingang einer Korrelations-Elektronik 12 ist mit dem Ausgang des Burst-Generators 9 verbunden und speist somit die Ultraschallwandler 4, 5 des zweiten Paars gleichzeitig mit dem Impuls-Burst. Die Korrelations-Elektronik 12 mißt, wie dies in der eingangs genannten US-A 44 84 478 beschrieben ist, aus innerhalb des Fluids an darin vorhandenen Fremdkörpern reflektierten und von den Ultraschallwandlern 4, 5 des zweiten Paars in den Pausen zwischen den Impuls-Bursts empfangenen Reflexionssignalen durch Korrelation, insb. durch Kreuzkorrelation, deren Zeitdifferenz und bestimmt daraus den Volumendurchfluß.

Mit dem oben erwähnten Schwellwert-Signal th kann von Benutzer derjenige Anteil an Fremdkörpern des Fluids vorgegeben bzw. eingestellt werden, bei dem von der Laufzeitmessung auf die Korrelationsmessung umgeschaltet werden soll.

Die Korrelations-Elektronik 12 gibt somit an ihrem Ausgang 121 - ebenfalls wie die Laufzeit-Elektronik an deren Ausgang 111 - ein den Volumen-Durchfluß repräsentierendes Signal ab, z.B. auf einem Display und/oder als geeignetes elektrisches Signal, wie z.B. ein dem jeweiligen Meßbereich zugeordnetes Stromsignal von 4 mA bis 20 mA.

Der elektronische Umachalter 130 der Umschalt-Elektronik 13 schaltet entweder die Laufzeit-Elektronik 11 oder die Korrelations-Elektronik 12 ein und somit die Treiber/Auswerte-Elektronik entweder in die Laufzeit- oder die Korrelations-Betriebsart.

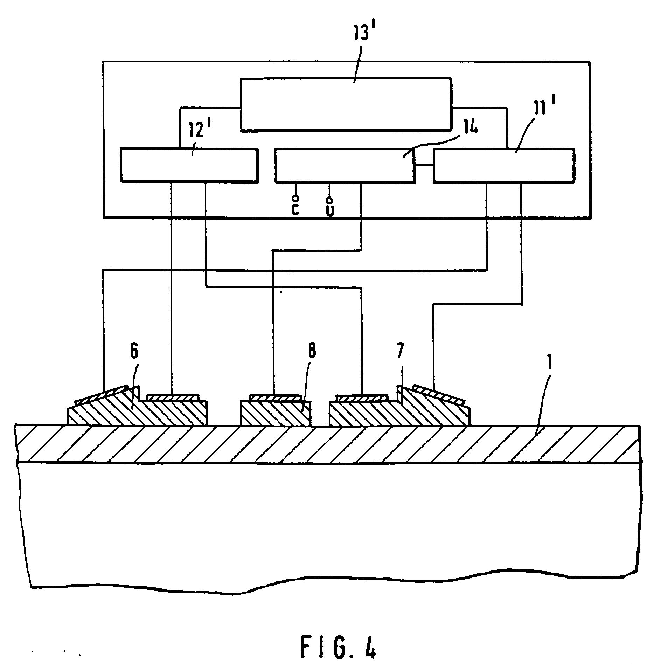

In Fig. 4 ist der mechanische Teil der Anordnung nach Fig. 2 zusammen mit einem auf die wesentlichen Funktionsblöcke komprimierten Blockschaltbild einer Treiber/Auswerte-Elektronik gezeigt. Es enthält eine Laufzeit-Elektronik 11', eine Korrelations-Elektronik 12', eine Umschalt-Elektronik 13' und eine Zusatz-Elektronik 14. Die Laufzeit-Elektronik 11' enthält der zeichnerischen Übersichtlichkeit wegen den Burst-Generator 9 und den Überkreuzschalter 10 nach Fig. 3.

Die Zusatz-Elektronik 14 dient der Bestimmung der Schallgeschwindigkeit in dem Fluid, ferner der Bestimmung des Lumens, also des Innendurchmessers D, und der Bestimmung der Wandstärke d einer realen Rohrleitung 1, wenn diese z.B. bereits vor Ort in einem geschlossenen System installiert ist, so daß die letzteren beiden Größen ohne Eingriff in diese Rohrleitung nicht mehr ausgemessen werden können.

Hierzu kann ein Clamp-on-Zusatz-Ultraschallwandler 8 dienen, der senkrecht zur Achse der Rohrleitung 1 entsprechend ihm zugeführten Impuls-Bursts Ultraschallsignale sendet und in den Sendepausen Reflexionssignale empfängt, und zwar Reflexionssignale, die sowohl an der direkt unterhalb von ihm liegenden Innenwand der Rohrleitung als auch an der durch das Fluid getrennten gegenüberliegenden Innenwand auftreten. Anstelle des Clamp-on-Zusatz-Ultraschallwandlers 8 kann auch einer der Ultraschallwandler des zweiten Paares für die Messung zusammen mit der Zusatz-Elektronik verwendet werden.

Die Zusatz-Elektronik 14 mißt somit die Orthogonal-Laufzeit des Ultraschallsignals in der Wand der Rohrleitung und die Orthogonal-Laufzeit des durch das Fluid sich ausbreitenden und an der dem Zusatz-Ultraschallwandler 8 gegenüberliegenden Innenwand der Rohrleitung reflektierten Ultraschallsignals.

Da das Material, aus der die reale Rohrleitung besteht, und somit die Schallgeschwindigkeit in diesem Material bekannt ist und der Außenumfang der realen Rohrleitung vor Ort gemessen werden kann, können diesen Größen proportionale Signale, also ein Schallgeschwindigkeitssignal c und ein Umfangssignal u, an entsprechenden Eingängen der Zusatz-Elektronik 14 vorgegeben werden.

Aus den beiden Orthogonal-Laufzeiten, aus dem Schallgeschwindigkeitssignal c und aus dem Umfangssignal u bestimmt die Zusatz-Elektronik 14 die Wandstärke d der Rohrleitung 1 und zeigt sie z.B. auf einem Display an. Dieser Wert wird dann beim Clamping-on der Ultraschallwandler 2, 3 des ersten Paars hinsichtlich ihres gegenseitigen Abstands s berücksichtigt. Auf den Display wird ferner die Schallgeschwindigkeit des Fluids angezeigt.

Clamp-on-Ultraschall-Volumendurchfluß-Meßgeräte nach der Erfindung sind für Messungen bei Reynoldszahlen größer als 10.000, insb. an Rohrleitungen mit Nennweiten größer als 200 mm, geeignet.

## Patentansprüche

1. Clamp-on-Ultraschall-Volumendurchfluß-Meßgerät
- mit einem ersten Paar Ultraschallwandler (2, 3),
-- von denen entweder jeweils der eine als Sendewandler und der andere als Empfangswandler bzw. umgekehrt betrieben ist
-- oder die beide kurzzeitig als Sendewandler und anschließend als Empfangswandler betrieben sind
-- und die längs einer von dem zu messenden Fluid durchströmten Rohrleitung (1) auf deren Außenwand achsparallel versetzt und mit einem von 90° abweichenden Winkel zwischen der Richtung des von ihnen erzeugten Ultraschalls und der Achse der Rohrleitung angeordnet sind,
- mit einem zweiten Paar Ultraschallwandler (4, 5), von denen jeder gleichzeitig als Sendewandler oder als Empfangswandler betrieben ist und die längs der Rohrleitung (1) auf deren Außenwand achsparallel versetzt und mit einem Winkel kleiner/gleich 90° zwischen der Richtung des von ihnen erzeugten Ultraschalls und der Achse der Rohrleitung angeordnet sind,
- und mit einer Treiber/Auswerte-Elektronik, die so eingerichtet ist, daß sie
-- entweder einen bzw. die Ultraschallwandler (2, 3) des ersten Paars mit einem Impuls-Burst speist und die Laufzeit von zwischen diesen Ultraschallwandlern in Vorwärts- und Rückwärts-Flußrichtung durch das Fluid hindurch sich ausbreitenden und an der diesen Ultraschallwandlern gegenüberliegenden Innenwand der Rohrleitung reflektierten Ultraschallsignalen mißt und daraus den Volumendurchfluß bestimmt (11),
-- oder die Ultraschallwandler (4, 5) des zweiten Paars gleichzeitig mit dein Impuls-Burst speist und aus innerhalb des Fluids an darin vorhandenen Fremdkörpern reflektierten und von diesen Ultraschallwandlern in den Pausen zwischen den Impuls-Bursts empfangenen Reflexionssignalen durch Korrelation deren Zeitdifferenz mißt sowie daraus den Volumendurchfluß bestimmt (12) und
-- die eine Umschalt-Elektronik (13) mit einem Schwellwertschalter (131) enthält,
--- die so eingerichtet ist, daß sie in Abhängigkeit vom Ausgangssignal des Schwellwertschalters die Treiber/Auswerte-Elektronik in die Laufzeit- oder die Korrelations-Betriebsart schaltet und
--- welchem Schwellwertschalter ein einstellbares Schwellwert-Signal (th) und ein Schwankungssignal (rms) zugeführt sind, das aus einem in Empfangsbetrieb von einem der Ultraschallwandler (2, 3) des ersten Paars abgegebenen Signal nach dessen Integration gebildet ist.

2. Clamp-on-Ultraschall-Volumendurchfluß-Meßgerät nach Anspruch 1, bei dem je ein Ultraschallwandler des ersten Paars und des zweiten Paars zu einem Paar von Verbund-Ultraschallwandlern (6, 7) vereinigt sind.

3. Clamp-on-Ultraschall-Volumendurchfluß-Meßgerät nach Anspruch 1 mit einem Clamp-on-Zusatz-Ultraschallwandler (8) und mit einer Zusatz-Elektronik (14),
- die so eingerichtet ist, daß sie jeweils senkrecht zur Achse der Rohrleitung (1) die Orthogonal-Laufzeit des Ultraschallsignals in der Wand der Rohrleitung und die Orthogonal-Laufzeit der durch das Fluid sich ausbreitenden und an der dem Zusatz-Ultraschallwandler (8) gegenüberliegenden Innenwand der Rohrleitung reflektierten Ultraschallsignals mißt,
-- der ein dein Außenumfang der Rohrleitung (1) proportionales Umfangssignal (u) und ein der Schallgeschwindigkeit im Material der Rohrleitung proportionales Schallgeschwindigkeitssignal (c) zugeführt sind und
-- die außerdem so eingerichtet ist, daß sie aus den beiden Orthogonal-Laufzeiten, aus dem Umfangssignal und dem Schallgeschwindigkeitssignal die Wandstärke (d) der Rohrleitung und die Schallgeschwindigkeit im Fluid bestimmt.

4. Clamp-on-Ultraschall-Volumendurchfluß-Meßgerät nach Anspruch 1, bei dem als Schwankungssignal (rms) das Ausgangssignal einer Effektivwert-Stufe dient.

5. Clamp-on-Ultraschall-Volumendurchfluß-Meßgerät nach Anspruch 1, bei dem als Schwankungssignal (rms) das Ausgangssignal eines Gleichrichters dient.

6. Clamp-on-Ultraschall-Volumendurchfluß-Meßgerät nach Anspruch 1, bei dem als Schwankungssignal (rms) das Ausgangssignal eines Spitze/Spitze-Detektors dient.

## Claims

1. A clamp-on ultrasonic volumetric flowmeter comprising:
- a first pair of ultrasonic transducers (2, 3)
-- one of which is operated as a transmitting transducer and the other as a receiving transducer or vice versa, or
-- which are both operated as transmitting transducers and subsequently as receiving transducers for short times, and
-- which are disposed on the outside surface of a pipe (1) carrying the fluid to be measured and are separated by a given distance in a direction parallel to the axis of the pipe, such that the angle between the direction of the ultrasound generated by them and the axis of the pipe is different from 90°;
- a second pair of ultrasonic transducers (4, 5) which are operated simultaneously as transmitting transducers or receiving transducers, and which are disposed on the outside surface of the pipe (1) and are separated by a given distance in a direction parallel to the axis of the pipe, such that the angle between the direc-tion of the ultrasound generated by them and the axis of the pipe is less than or equal to 90°; and
- driver/evaluation electronics designed to
-- either supply one or both ultrasonic transducers (2, 3) of the first pair with a pulse burst, to measure the travel times of ultrasonic signals propagating between said ultrasonic transducers through the fluid in the downstream and upstream directions and reflected at the inside surface of the pipe opposite said ultrasonic transducers, and to determine volumetric flow rate therefrom,
-- or supply the ultrasonic transducers (4, 5) of the second pair simultaneously with the pulse burst and, using correlation techniques, to measure the time difference between signals reflected at foreign particles in the fluid and received in the intervals between the pulse burst by said ultrasonic transducers, and to determine volumetric flow rate therefrom, and
-- said driver/evaluation electronics including changeover electronics (13) with a threshold switch (131)
--- which are designed to switch the driver/evaluation electronics to the travel-time mode or the correlation mode in response to the output of the threshold switch,
--- said threshold switch being supplied with an adjustable threshold signal (th) and a variation signal (rms) which is formed from a signal that was provided by one of the ultrasonic transducers (2, 3) of the first pair in the receive mode and then integrated.

2. The clamp-on ultrasonic volumetric flowmeter as claimed in claim 1 wherein one ultrasonic transducer of the first pair and one ultrasonic transducer of the second pair as well as the respective other transducers of the first and second pairs are united to form a pair of compound ultrasonic transducers (6, 7).

3. The clamp-on ultrasonic volumetric flowmeter as claimed in claim 1, comprising an additional ultrasonic transducer (8) and additional electronics (14)
- which are designed to measure, in a direction perpendicular to the axis of the pipe (1), the orthogonal travel time of the ultrasonic signal in the wall of the pipe and the orthogonal travel time of the ultrasonic signal propagating through the fluid and reflected at the inside surface of the pipe opposite the additional ultrasonic transducer (8),
- which are supplied with a circumference signal (u) proportional to the outer circumference of the pipe (1) and with a sound-velocity signal (c) proportional to the velocity of sound in the material of the pipe, and
- which are designed to determine the wall thickness (d) of the pipe and the velocity of sound in the fluid from the two orthogonal travel times, the circumference signal, and the sound-velocity signal.

4. The clamp-on ultrasonic volumetric flowmeter as claimed in claim 1 wherein the variation signal (rms) is the output signal of a root-mean-square stage.

5. The clamp-on ultrasonic volumetric flowmeter as claimed in claim 1 wherein the variation signal (rms) is the output signal of a rectifier.

6. The clamp-on ultrasonic volumetric flowmeter as claimed in claim 1 wherein the variation signal (rms) is the output signal of a peak-to-peak detector.

## Revendications

1. Appareil de mesure du débit volumique à ultrasons monté extérieurement, comprenant :
- une première paire de transducteurs ultrasonores (2, 3),
-- dont soit, à chaque instant, l'un travaille en transducteur émetteur et l'autre en transducteur récepteur ou inversement,
-- soit les deux travaillent brièvement en transducteur émetteur puis en transducteur récepteur,
-- qui sont disposés le long d'une conduite tubulaire (1) parcourue par le fluide à mesurer, décalés dans une direction parallèle à l'axe sur la paroi extérieure de cette conduite, et de façon à former un angle différent de 90° entre la direction de l'ultrason qu'ils produisent et l'axe de la conduite tubulaire,
- une deuxième paire de transducteurs ultrasonores (4, 5) dont chacun travaille simultanément en transducteur émetteur ou en transducteur récepteur et qui sont disposés le long de la conduite tubulaire (1) décalés dans une direction parallèle à l'axe sur la paroi extérieure de cette conduite, et de façon à former un angle inférieur/égal à 90° entre la direction de l'ultrason qu'ils produisent et l'axe de la conduite tubulaire,
- et une électronique d'attaque/analyse qui est agencée de manière que
-- soit, elle alimente un ou les transducteurs ultrasonores (2, 3) de la première paire avec une bouffée d'impulsions et mesure le temps de parcours de signaux ultrasonores qui se propagent entre les transducteurs ultrasonores à travers le fluide, vers l'avant et vers l'arrière de l'écoulement et qui sont réfléchis sur la paroi intérieure de la conduite tubulaire qui est à l'opposé de ces transducteurs ultrasonores et, sur leur base, détermine le débit volumique (11)
-- soit, elle alimente les transducteurs ultrasonores (4, 5) de la deuxième paire simultanément avec la bouffée d'impulsions et, sur la base des signaux de réflexion réfléchis à l'intérieur du fluide sur des corps étrangers qui y sont présents et reçus par ces transducteurs ultrasonores dans les pauses entre les bouffées d'impulsions, mesure les différences de temps par des corrélations et, sur cette base, détermine le débit volumique (12) et
- qui renferme une électronique de commutation (13) possédant un commutateur de valeur de seuil (131)
--- qui est agencée de manière qu'en fonction du signal de sortie du commutateur de valeur de seuil, met en marche l'électronique d'attaque/analyse dans un mode d'exploitation de temps de parcours ou de corrélation et
--- auquel commutateur de valeur de seuil sont envoyés un signal de valeur de seuil réglable (th) et un signal de fluctuation (rms) qui est formé à partir d'un signal émis dans le mode réception par un des transducteurs ultrasonores (2, 3) de la première paire, après l'intégration du signal.

2. Appareil de mesure du débit volumique à ultrasons monté extérieurement selon la revendication 1, dans lequel un transducteur ultrasonore de la première paire et un transducteur ultrasonore de la deuxième paire sont réunis en une paire de transducteurs ultrasonores composites (6,7).

3. Appareil de mesure du débit volumique à ultrasons monté extérieurement selon la revendication 1, comprenant un transducteur ultrasonore additionnel (8) monté extérieurement et une électronique additionnelle (14)
- qui est agencée de manière
-- qu'elle mesure à chaque fois perpendiculairement à l'axe de la conduite tubulaire (1) le temps de parcours orthogonai du signai ultrasonore dans la paroi de la conduite tubulaire et le temps du parcours orthogonal des signaux ultrasonores qui se propagent à travers le fluide et sont réfléchis sur la paroi intérieure de la conduite tubulaire qui est à l'opposé du transducteur ultrasonore additionnel (8),
-- et à laquelle sont envoyés un signal de périmètre (u) proportionnel au périmètre extérieur de la conduite tubulaire (1) et un signal de vitesse du son (c) proportionnel à la vitesse du son dans la matière de la conduite tubulaire, et
- qui est par ailleurs agencée de manière que sur la base des deux temps de parcours orthogonaux, du signal de périphérie et du signal de vitesse du son, elle détermine l'épaisseur de paroi (d) de la conduite tubulaire et la vitesse du son dans le fluide.

4. Appareil de mesure du débit volumique à ultrasons monté extérieurement selon la revendication 1, dans lequel le signal de sortie d'un étage de valeur effective est utilisé comme signal de fluctuation (rms).

5. Appareil de mesure du débit volumique à ultrasons monté extérieurement selon la revendication 1, dans lequel le signal de sortie d'un redresseur sert de signal de fluctuation (rms).

6. Appareil de mesure du débit volumique à ultrasons monté extérieurement selon la revendication 1, dans lequel le signal de sortie d'un détecteur crête/crête sert de signal de fluctuation (rms).
